# EUROPÄISCHE PATENTSCHRIFT

(11) **EP 1 343 649 B1**
(45) Veröffentlichungstag und Bekanntmachung des Hinweises auf die Patenterteilung: **07.07.2004**
(21) Anmeldenummer: 02785359.7
(22) Anmeldetag: 04.11.2002
(51) Int. Cl.: B60J 7/14, B60J 7/12

(54) **ZWISCHEN EINER SCHLIESSPOSITION UND EINER ÖFFNUNGSPOSITION VERSTELLBARES HARDTOP-FAHRZEUGVERDECK**
HARD CONVERTIBLE TOP FOR VEHICLES, WHICH CAN BE ADJUSTED BETWEEN A CLOSED POSITION AND AN OPENED POSITION
CAPOTE RIGIDE DE VEHICULE, POUVANT ETRE REGLEE ENTRE UNE POSITION FERMEE ET UNE POSITION OUVERTE

(30) Priorität: 09.11.2001 DE 10154730
(43) Veröffentlichungstag der Anmeldung: 17.09.2003
(73) Patentinhaber: CTS Fahrzeug-Dachsysteme GmbH, 21079 Hamburg (DE)
(72) Erfinder: HASSELGRUBER, Andreas, 71735 Eberdingen-Nussdorf (DE); WEZYK, Wojciech, 71065 Sindelfingen (DE); LAUE, Klaus, 63303 Dreieich (DE)
(74) Vertreter: Müller, Gottfried
(86) Internationale Anmeldenummer: PCT/EP2002/012265
(87) Internationale Veröffentlichungsnummer: WO 2003/039898

(56) Entgegenhaltungen:
- DE-A- 4 320 603
- DE-C- 10 039 853
- US-A- 3 059 962
- US-A- 6 053 560

## Beschreibung

Die Erfindung bezieht sich auf ein zwischen einer Schließposition und einer Öffnungsposition verstellbares Hardtop-Fahrzeugverdeck nach dem Oberbegriff des Anspruches 1.

In der Druckschrift DE 198 05 477 C1 wird ein Fahrzeugverdeck beschrieben, welches zwei in sich starre Dachteile umfasst, die in Schließposition des Daches unmittelbar aneinander grenzen und eine durchgehende Dachaußenhaut bilden. Zur Verstellung des Hardtops zwischen Schließposition und Öffnungs- bzw. Ablageposition ist eine Dachkinematik vorgesehen, welche das hintere Dachteil mit der Fahrzeugkarosserie und das vordere Dachteil mit dem hinteren Dachteil verbindet und die überführungsbewegung der Dachteile ermöglicht.

Allgemein besteht bei Cabriolet-Fahrzeugen insbesondere bei höheren Fahrgeschwindigkeiten das Problem, dass bei geschlossenem Fahrzeugverdeck an der Dachaußenhaut ein Unterdruck herrscht, der die Dachteile anzuheben droht, wodurch die Dichtigkeit des Daches beeinträchtigt wird und was auf Grund der hohen Kräfte langfristig zu Beschädigungen des Daches führen kann.

Aus der gattungsgemäßen Druckschrift FR-A 2 791 007 ist ein zweiteiliges Fahrzeugdach mit zwei in Schließposition hintereinander angeordneten Dachteilen bekannt, in deren Seitenbereich Verriegelungsstangen geführt sind. An einem stirnseitigen Ende einer der Verriegelungsstangen befindet sich eine Aufnahme, am korrespondierenden stirnseitigen Ende der Stange im benachbarten Fahrzeugdachteil ist ein Verriegelungsbolzen angeordnet, welcher in Verriegelungsstellung in die Aufnahme eingreift. Die Verriegelungsstangen mit Aufnahme und Bolzen bilden einen Verriegelungsmechanismus für die Arretierung der Dachteile in Schließposition.

Nachteilig bei dieser Ausführung ist jedoch, dass zur Ver- und Entriegelung jeweils die gesamte Verriegelungsstange, an der der Bolzen gehalten ist, verstellt werden muss. Für eine präzise Stellbewegung der Verriegelungsstange sind über die Länge des betreffenden Dachteiles verteilte Führungen erforderlich, in denen die Verriegelungsstange geführt ist. Es besteht die Gefahr, dass nach längerem Gebrauch die Verriegelungsstange in den Führungen nicht mehr präzise läuft, so dass entweder mit einem sich vergrößernden Spiel gerechnet werden muss, wodurch ein sicheres Eingreifen des Bolzens in die Aufnahme nicht gewährleistet werden kann, oder die Verriegelungsstange verkanten kann und eine Stellbewegung der Stange unmöglich wird.

Der Erfindung liegt das Problem zugrunde, ein verstellbares Fahrzeugverdeck in Schließposition mit einfachen Mitteln sicher zu verriegeln.

Dieses Problem wird erfindungsgemäß mit den Merkmalen des Anspruches 1 gelöst. Die Unteransprüche geben zweckmäßige Weiterbildungen an.

In das Dachteil und das angrenzende Fahrzeugbauteil ist je ein Führungsrohr integriert, wobei die Führungsrohre benachbarter Dach- bzw. Fahrzeugbauteile in Schließposition des Fahrzeugverdecks in einer gemeinsamen Fluchtlinie liegen und eine gemeinsame, durchgehende Rohrachse aufweisen. In den Führungsrohren ist ein Verriegelungsbolzen geführt, der zwischen einer Verriegelungsstellung und einer Entriegelungsstellung verschiebbar bzw. verstellbar ist. In der Verriegelungsstellung des Bolzens, welche der Schließposition des Fahrzeugdaches zugeordnet ist, sind die benachbarten Dach- bzw. Fahrzeugbauteile fest miteinander verriegelt, wodurch eine Relativbewegung zwischen diesen Bauteilen verhindert ist und insbesondere ein Anheben des oder der Dachteile bei höheren Fahrzeuggeschwindigkeiten auf Grund des dann herrschenden Unterdrucks auf der Dachaußenseite mit Sicherheit verhindert werden kann, wodurch die Dichtigkeit, insbesondere die Wind- und die Druckdichtigkeit, sowie die Lebensdauer des Fahrzeugdaches entscheidend verbessert werden kann.

Ein weiterer Vorteil liegt darin, dass die Führungsrohre die Dachteile bzw. Fahrzeugbauteile verstärken, wodurch die Steifigkeit der Dachteile bzw. Fahrzeugbauteile und insbesondere auch die Fahrzeugsicherheit im Falle eines Überschlages verbessert ist.

Die Führungsrohre befinden sich zweckmäßig in beiden Seitenbereichen jedes Dachteiles links und rechts einer Fahrzeuglängsachse. Dementsprechend sind zumindest zwei Verriegelungsbolzen im linken und rechten Dachbereich vorgesehen, über die eine symmetrische Verriegelung zwischen aneinander grenzenden Dachteilen bzw. einem Dachteil und einem angrenzenden Fahrzeugbauteil zu realisieren ist. Die Führungsrohre können hierbei in einem umgeschlagenen seitlichen Falz des Dachbleches verlaufen.

Das Fahrzeugverdeck ist vorteilhaft als Hardtop ausgeführt, bei dem die Dachteile in sich starr ausgebildet sind. In einer besonders vorteilhaften Ausführung sind insgesamt drei starre Dachteile vorgesehen, die über die Führungsrohre und die darin geführten Verriegelungsbolzen zu verriegeln sind, wobei die Verriegelungsbolzen zweckmäßig in dem mittleren Dachteil gehalten sind und in zugeordnete Führungsrohre im vorderen Dachteil bzw. im hinteren Dachteil zur Erlangung der Verriegelungsstellung einführbar sind. Die Verriegelungsmechanik einschließlich der Betätigungseinheit für die Betätigung der Verriegelungsbolzen ist sowohl im vorne liegenden Bereich des mittleren Dachteiles als auch im hinten liegenden Bereich des mittleren Dachteiles symmetrisch bzw. gleichartig aufgebaut, wobei bevorzugt eine gemeinsame Stelleinrichtung für die Betätigung von in einer Wirklinie liegenden Verriegelungsbolzen für die Verriegelung zum vorderen Dachteil und zum hinteren Dachteil vorgesehen ist. Zweckmäßig ist das Führungsrohr durchgehend über die Länge des mittleren Dachteiles ausgebildet und nimmt in seinen beiden endseitigen Abschnitten jeweils einen Verriegelungsbolzen auf.

Bei der Stelleinrichtung handelt es sich in einer ersten bevorzugten Ausführung um einen Aktuator, der beispielsweise hydraulisch oder elektrisch ausgebildet und betätigbar ist. Diese Ausführung bietet den Vorteil, dass keine komplizierte Kopplungskinematik zur Zwangskopplung der Bewegung der Verriegelungsbolzen mit der Bewegung des Fahrzeugdaches erforderlich ist.

In einer zweiten bevorzugten Ausführung kann es aber auch zweckmäßig sein, die Verriegelungs- bzw. Entriegelungsbewegung des Bolzens kinematisch mit der Dachbewegung zu koppeln, wobei insbesondere eine Verbindung mit der Relativkinematik zwischen zwei unmittelbar benachbarten Dachteilen in Betracht kommt. Diese Ausführung hat den Vorteil, dass auf einen zusätzlichen, energieverbrauchenden Aktuator verzichtet werden kann.

Der Verriegelungsbolzen besitzt vorteilhaft eine Rastnase, welche in Verriegelungsstellung in eine korrespondierende Ausnehmung in einem der Führungsrohre einragt. Zur Überführung von Entriegelungsposition in die Verriegelungsposition bzw. umgekehrt führt der Verriegelungsbolzen zweckmäßig eine gemischt translatorisch-rotatorische Bewegung durch, welche sich zusammensetzt aus einer translatorischen Verschiebebewegung aus dem den Verriegelungsbolzen haltenden Führungsrohr in das zweite Führungsrohr hinein und einer rotatorischen Drehbewegung zur Erreichung der Verriegelungsstellung und Verrastung der Rastnase in der ihr zugeordneten Ausnehmung. Die Verriegelung benachbarter Dachteile erfolgt somit nach dem Prinzip eines Bajonettverschlusses. Es kommen aber auch ausschließlich translatorische oder ausschließlich rotatorische Stellbewegungen des Verriegelungsbolzens in Betracht.

Vorteilhaft kann ein bewegliches Dachteil in Schließstellung des Daches mit einem fahrzeugfesten Bauteil verriegelt werden, indem in Schließstellung ein Führungsrohr im Dachteil mit einem Führungsrohr im fahrzeugfesten Bauteil fluchtet und ein Verriegelungsbolzen in eine die beiden Führungsrohre verbindende Verriegelungsstellung verstellt wird. Bei dem fahrzeugfesten Bauteil handelt es sich insbesondere um eine A-Säule des Fahrzeuges, also eine über die Karosserielinie aufragende, sich parallel zur Fahrzeuglängsachse erstreckende Säule, welche Teil des Windschutzscheibenrahmens ist. Die Verriegelungs- und Entriegelungsbewegung des Verriegelungsbolzens wird zweckmäßig als kinematische Zwangsbewegung in Abhängigkeit von der Dachbewegung gesteuert. Möglich ist aber auch eine von der Dachbewegung kinematisch unabhängige, von einem separaten Aktuator erzeugte Stellbewegung.

Weitere Vorteile und zweckmäßige Ausführungen sind den weiteren Ansprüchen, der Figurenbeschreibung und den Zeichnungen zu entnehmen. Es zeigen:
- Fig. 1: eine Seitenansicht auf ein dreiteiliges Hardtop-Fahrzeugdach in Schließposition, wobei das mittlere Dachteil sowohl mit dem vorderen Dachteil als auch mit dem hinteren Dachteil verriegelt ist,
- Fig. 2: eine Ansicht des mittleren Dachteiles gemäß Schnittlinie II-II aus Fig. 1,
- Fig. 3: ein in zwei entgegengesetzte Richtungen wirkender Aktuator, welcher im mittleren Dachteil zur gleichzeitigen Betätigung von zwei im vorderen Dachabschnitt und im hinteren Dachabschnitt angeordneten Verriegelungsbolzen eingesetzt wird,
- Fig. 4: das Detail IV aus Fig. 1 in einer vergrößerten Darstellung mit dem das vordere Dachteil und das mittlere Dachteil verbindenden Verriegelungsbolzen in Verriegelungsstellung,
- Fig. 5: in einer aufgeklappten Ebene eine schematische Darstellung einer Ausnehmung im endseitigen Bereich eines Führungsrohres zur Aufnahme einer Rastnase des Verriegelungsbolzens,
- Fig. 6: in einer perspektivischen Ansicht ein vorderes Dachteil in Schließposition, welches mit der Fahrzeug-A-Säule verriegelt ist,
- Fig. 7: eine Draufsicht au den Verriegelungsbolzen zwischen Fahrzeugdach und A-Säule in Verriegelungsstellung.

In den Figuren sind gleiche Bauteile mit gleichen Bezugszeichen versehen.

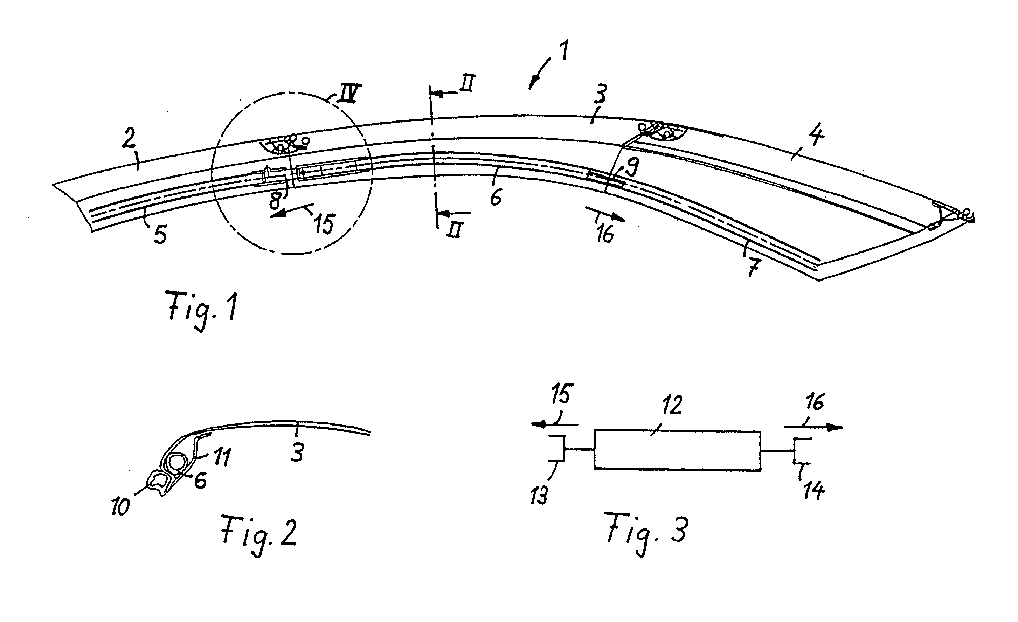

Bei dem in Fig. 1 dargestellten Fahrzeugverdeck 1 handelt es sich um ein Hardtop-Fahrzeugdach, das zwischen der gezeigten Schließposition, in welcher der Fahrzeuginnenraum überdeckt ist, und einer Ablage- bzw. Öffnungsposition zu verstellen ist, in welcher das Fahrzeugverdeck 1 in einem heckseitigen Verdeckkasten abgelegt ist.

Alternativ zu einem Hardtop kommt im Rahmen der Erfindung auch ein Softtop in Betracht.

Das Fahrzeugverdeck 1 umfasst drei jeweils in sich starr ausgebildete Dachteile 2, 3, 4, die in Schließposition unmittelbar aneinander grenzen und in Fahrzeuglängsrichtung hintereinander liegend angeordnet sind und eine gemeinsame Dachaußenhaut bilden. Die Überführung des Fahrzeugverdeckes 1 zwischen der Schließ- und der Ablageposition erfolgt mittels einer nicht dargestellten Dachkinematik.

Um in Schließposition des Fahrzeugverdeckes 1 unmittelbar aneinander grenzende Dachteile gegenseitig zu verriegeln, sind Verriegelungsbolzen 8 und 9 vorgesehen, die in Führungsrohren 5, 6 und 7 verschieblich gelagert sind. Die Verriegelungsbolzen 8 und 9 sind zweckmäßig an dem dem mittleren Dachteil 3 zugeordneten mittleren Führungsrohr 6 im vorne liegenden Dachabschnitt bzw. hinten liegenden Dachabschnitt des mittleren Dachteiles gehalten und können zwischen einer Entriegelungsstellung, in welcher die Verriegelungsbolzen 9 in Außereingriff mit den benachbarten Dachteilen stehen, und einer Verriegelungsstellung verstellt werden, in der der vordere Verriegelungsbolzen 8 das vordere Dachteil 2 mit dem mittleren Dachteil 3 und der hintere Verriegelungsbolzen 9 das mittlere Dachteil 3 mit dem hinteren Dachteil 4 verriegelt. Die drei Führungsrohre 5, 6 und 7 in den einzelnen Dachteilen 2, 3 und 4 liegen zweckmäßig in Schließposition des Fahrzeugverdeckes in einer Flucht mit einer gemeinsamen Wirklinie und bilden ein gemeinsames, durchgehendes Führungsrohr mit einer gemeinsamen Rohrachse. In Verriegelungsposition sind die Verriegelungsbolzen 8 und 9 zum Teil in die angrenzenden Führungsrohre 5 bzw. 7 der benachbarten Dachteile eingeschoben.

Wie der Schnittdarstellung gemäß Fig. 2 zu entnehmen, sind die Führungsrohre im Seitenbereich der Dachteile angeordnet, wobei zweckmäßig in beiden Seitenbereichen jedes Dachteiles jeweils ein Führungsrohr vorgesehen ist. Die Führungsrohre dienen nicht nur der Aufnahme der Verriegelungsbolzen, sondern verstärken zusätzlich die Dachteile und erhöhen dadurch die Stabilität des Fahrzeugdaches. Die Führungsrohre bestehen vorteilhaft aus einem Leichtbauwerkstoff. Zweckmäßig befinden sich die Führungsrohre in einem umgeschlagenen Falz des Dachbleches bzw. in einem seitlichen, innen liegenden Dachblechabsatz. Unmittelbar benachbart zum Führungsrohr ist ein karosseriefest angeordnetes Dichtungselement 10 auf einem Karosserieblech 11 vorgesehen, über das in Schließposition des Fahrzeugdaches die Dichtigkeit hergestellt wird.

Fig. 3 zeigt eine Stelleinrichtung zur Betätigung der Verriegelungsbolzen. Die Stelleinrichtung ist als Aktuator 12 ausgeführt, bei dem es sich insbesondere um ein hydraulisch betätigbares Stellglied, gegebenenfalls aber auch um ein elektrisch betätigbares Stellglied handelt. Der Aktuator 12 weist auf gegenüberliegenden Seiten jeweils ein Beaufschlagungsglied 13, 14 auf, welches bei einer Betätigung des Aktuators 12 in Pfeilrichtung 15 bzw. 16 ausfährt und den jeweils zugeordneten Verriegelungsbolzen 8 bzw. 9 beaufschlagt und aus der Entriegelungsstellung in die Verriegelungsstellung überführt, siehe auch Fig. 1. Der Aktuator 12 ist zweckmäßig im mittleren Dachteil 3 angeordnet, insbesondere im Führungsrohr 6 in der Mitte zwischen den endseitig gehaltenen Verriegelungsbolzen 8 und 9, wobei die Beaufschlagungsglieder 13 und 14 sowohl in Zug- als auch in Druckrichtung eine Stellbewegung auf die Verriegelungsbolzen übertragen, so dass diese bei einer Betätigung des Aktuators zwischen ihrer Entriegelungs- und ihrer Verriegelungsstellung verstellt werden.

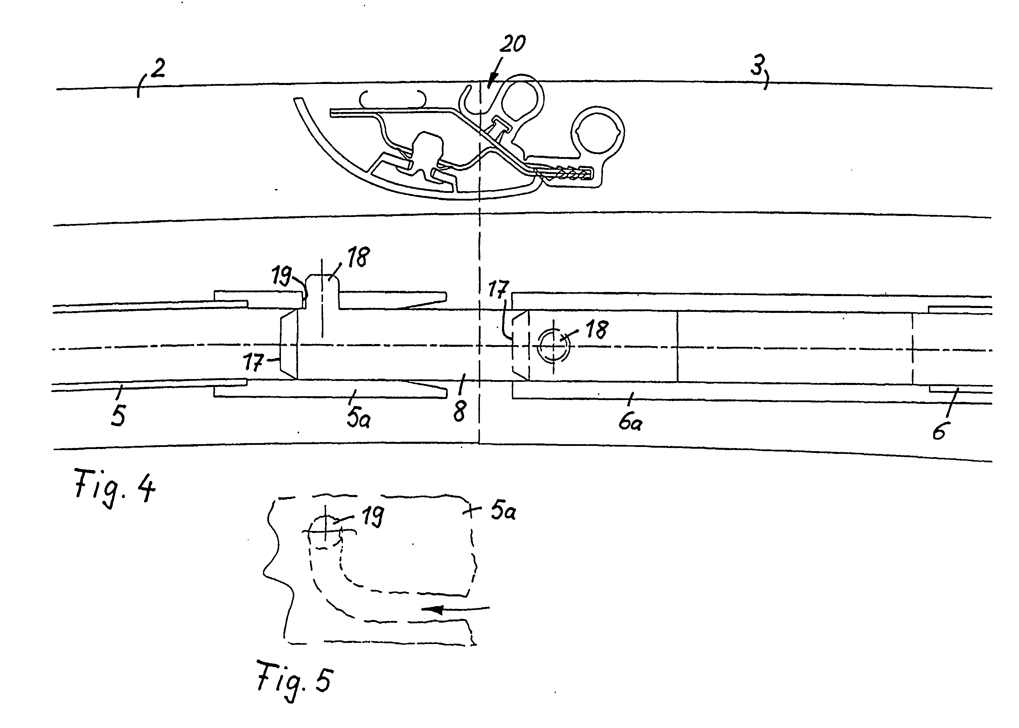

Fig. 4 zeigt eine Ausschnittvergrößerung aus dem Bereich aneinander grenzender Dachteile. Dargestellt ist ein Ausschnitt mit einem Verriegelungsbolzen 8, der in einem Endabschnitt 6a des Führungsrohres 6 im mittleren Dachteil 3 geführt und aus der mit gestrichelter Linie dargestellten, zurückgezogenen Entriegelungsstellung in die mit durchgezogenem Strich dargestellte Verriegelungsstellung überführbar ist, in welcher der Verriegelungsbolzen 8 in einen hülsenähnlichen Endabschnitt 5a des Führungsrohres 5 im vorderen Dachteil 2 einragt. Benachbart zur Stirnseite 17 weist der Verriegelungsbolzen 8 eine radial abstehende Rastnase 18 auf, welche in Verriegelungsposition in eine Ausnehmung 19 in den Endabschnitt 5a des Führungsrohres 5 einragt. Die Ausnehmung 19 erstreckt sich am Umfang des Endabschnittes 5a des Führungsrohres 5 und besitzt, beginnend an der Stirnseite, die dem mittleren Dachteil 3 zugewandt ist, zunächst einen axialen Abschnitt, der über einen etwa 90°-Winkel in einen Umfangsabschnitt übergeht, an dessen Ende sich die Rastausnehmung befindet, in welche die Rastnase in Verriegelungsposition des Verriegelungsbolzens einragt. Auf Grund dieser Ausführung der Ausnehmung 19 ist die Verriegelung zwischen benachbarten Dachteilen als Bajonettverschluss ausgeführt, welcher eine gemischt translatorisch-rotatorische Stellbewegung des Verriegelungsbolzens zum Ent- bzw. Verriegeln voraussetzt. In Verriegelungsposition ist hierdurch in Fahrzeuglängsrichtung gesehen eine formschlüssige Verbindung zwischen benachbarten Dachteilen gegeben. Die Endabschnitte 5a und 6a können als eigenständige Bauteile ausgeführt sein, die mit den zugeordneten Führungsrohren verbunden sind.

Im Bereich der Dachaußenseite befindet sich im Übergang zwischen den benachbarten Dachteilen 2 und 3 eine Dichtungsanordnung 20, die den Spalt zwischen den Dachteilen abdichtet.

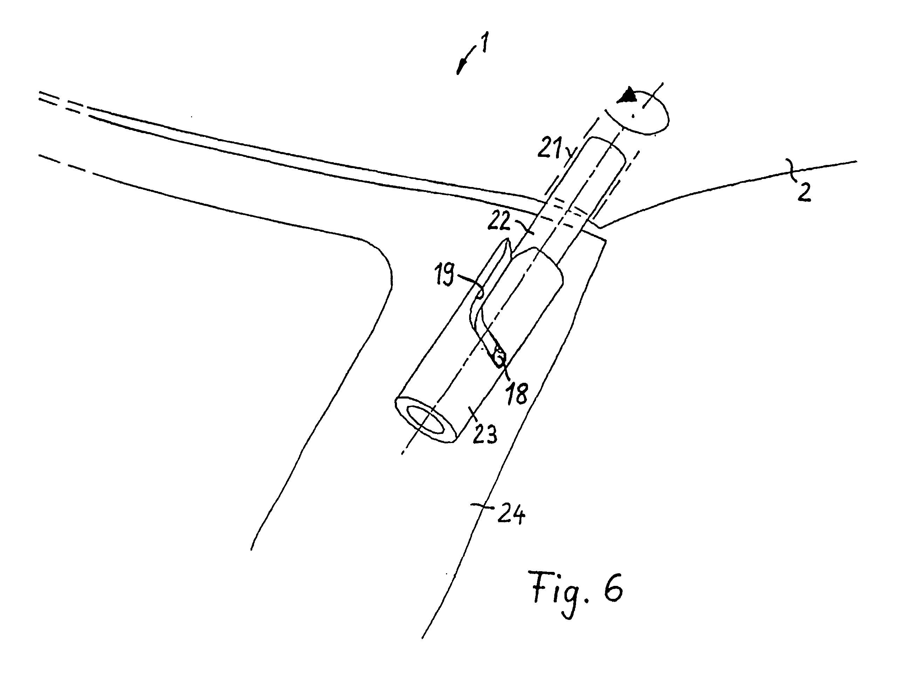

In Fig. 6 ist ein weiteres Ausführungsbeispiel zu der Erfindung dargestellt, gemäß dem das vordere Dachteil 2 des Fahrzeugverdeckes 1 über einen weiteren Verriegelungsbolzen 22, welcher sich im Frontbereich des vorderen Dachteiles 2 befindet, mit einer seitlichen, vorderen A-Säule 24 in Schließstellung des Fahrzeugdaches zu verriegeln ist. Bei der A-Säule 24 handelt es sich um die über die Karosserielinie aufragende, sich parallel zur Fahrzeuglängsrichtung erstreckende Strebe des Windschutzscheibenrahmens, an welchem das vordere Fahrzeugverdeck 2 in Schließstellung festgelegt wird. Der Verriegelungsbolzen 22 ist in einem weiteren Führungsrohr 21 geführt, welches sich am vorderen Dachteil 2 befindet. In der A-Säule 24 ist ein weiteres Führungsrohr 23 angeordnet, welches in Verriegelungsstellung den Verriegelungsbolzen 22 aufnimmt. Der Verriegelungsbolzen 22 ist zweckmäßig - wie mit dem dargestellten Pfeil gekennzeichnet - nur rotatorisch um seine Längsachse zu verdrehen, in Längsrichtung ist der Verriegelungsbolzen 22 dagegen dachfest am vorderen Dachteil 2 gehalten. Zur Überführung in Verriegelungsstellung wird beim Schließen des Fahrzeugdaches der über die Vorderkante des vorderen Dachteiles 2 hinausragende Verriegelungsbolzen 22 in die Öffnung des Führungsrohres 23 in der Säule 24 eingeführt. In einem vorderen Abschnitt des Verriegelungsbolzens 22 ist eine Rastnase 18 angeordnet, die in eine korrespondierende, als Führungskulisse bzw. Führungsbahn ausgeführte Ausnehmung 19 einragt und in dieser geführt ist. Die Führungsbahn 19 besitzt einen entlang der Achse des Führungsrohres 23 verlaufenden, geradlinigen ersten Abschnitt und einen sich hieran anschließenden, mit einer Komponente in Umfangsrichtung erstreckenden zweiten Abschnitt; beide Abschnitte zusammengenommen ergeben einen Bajonettverschluss für die Festlegung und Verriegelung des Verriegelungsbolzens 22.

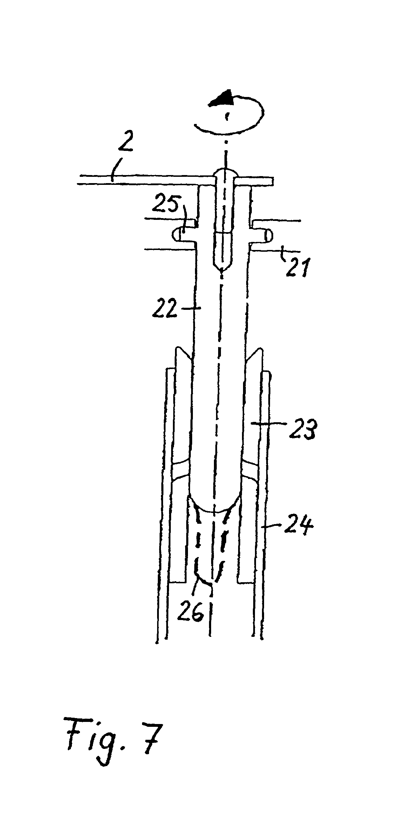

Wie der Draufsicht gemäß Fig. 7 zu entnehmen, ist das Führungsrohr 21 im vorderen Dachteil 2 als Führungsscheibe ausgebildet, in welcher der Verriegelungsbolzen 22 aufgenommen ist und über eine Umfangsnut 25 drehbar gelagert ist. Wie strichliert dargestellt, kann an der Spitze des Verriegelungsbolzens 22 ein Zentrierdorn 26 vorgesehen sein, welcher das Einführen des Verriegelungsbolzens 22 in das Führungsrohr 23 in der A-Säule 24 während des Schließvorganges des Fahrzeugdaches und Annähern des vorderen Dachteiles 2 an den Windschutzscheibenrahmen erleichtert.

Das Führungsrohr in der A-Säule kann als eingeschweißtes Rohr, gegebenenfalls aber auch als Strangpressprofil, als Gußteil oder als IHD-Teil ausgeführt sein.

## Patentansprüche

1. Zwischen einer Schließposition und einer Öffnungsposition verstellbares Fahrzeugverdeck, mit mindestens einem Dachteil (2, 3, 4), das in Schließposition eine Dachaußenhaut bildet und über einen Verriegelungsbolzen (8, 9, 22) mit einem angrenzenden Dachteil (2,3,4) bzw. fahrzeugfesten Bauteil (24) verbunden ist, wobei der Verriegelungsbolzen (8, 9, 22) zwischen einer Verriegelungsstellung und einer Entriegelungsstellung verstellbar ist,
**dadurch gekennzeichnet,**
**dass** in das Dachteil (2, 3, 4) bzw. in das angrenzende fahrzeugfeste Bauteil (24) je ein Führungsrohr (5, 6, 7, 23) integriert ist, dass in Schließposition des Fahrzeugverdeckes (1) die Führungsrohre (5, 6, 7, 23) in einer Flucht liegen und ein gemeinsames, durchgehendes Rohr mit einer gemeinsamen Rohrachse aufweisen und dass die Führungsrohre (5, 6, 7, 23) über den Verriegelungsbolzen (8, 9, 22) zu verbinden sind, der in den Führungsrohren (5, 6, 7, 23) verschiebbar geführt ist.

2. Fahrzeugverdeck nach Anspruch 1,
**dadurch gekennzeichnet,**
**dass** der Verriegelungsbolzen (8, 9, 22) eine Rastnase (18) aufweist, die in Verriegelungsstellung in eine korrespondierende Ausnehmung (19) in einem der Führungsrohre (5, 6, 7, 23) einragt.

3. Fahrzeugverdeck nach Anspruch 1 oder 2,
**dadurch gekennzeichnet,**
**dass** ein Aktuator (12) zur Betätigung des Verriegelungsbolzens (8, 9, 22) vorgesehen ist.

4. Fahrzeugverdeck nach einem der Ansprüche 1 bis 3,
**dadurch gekennzeichnet,**
**dass** der Verriegelungsbolzen (8, 9, 22) über die Dachkinematik des Fahrzeugverdecks (1) betätigbar ist.

5. Fahrzeugverdeck nach einem der Ansprüche 1 bis 4,
**dadurch gekennzeichnet,**
**dass** in beiden Seitenbereichen des Dachteils (2, 3, 4) links und rechts einer Längsmittelachse jeweils ein Verriegelungsbolzen (8, 9) vorgesehen ist.

6. Fahrzeugverdeck nach einem der Ansprüche 1 bis 5,
**dadurch gekennzeichnet,**
**dass** das Fahrzeugverdeck (1) als Hardtop ausgeführt und die Dachteile (2, 3, 4) in sich starr ausgebildet sind.

7. Fahrzeugverdeck nach einem der Ansprüche 1 bis 6,
**dadurch gekennzeichnet,**
**dass** mindestens zwei Dachteile (2, 3, 4) vorgesehen sind, die in Schließposition in Fahrzeuglängsrichtung hintereinander liegend aneinander grenzen und in denen jeweils ein Führungsrohr (5, 6, 7) verläuft und die über einen Verriegelungsbolzen (8, 9) zu verbinden sind.

8. Fahrzeugverdeck nach Anspruch 7,
**dadurch gekennzeichnet,**
**dass** insgesamt drei Dachteile (2, 3, 4) vorgesehen sind und das vordere Dachteil (2) und das hintere Dachteil (4) über jeweils einen Verriegelungsbolzen (8, 9) mit dem mittleren Dachteil (3) zu verriegeln sind.

9. Fahrzeugverdeck nach Anspruch 8,
**dadurch gekennzeichnet,**
**dass** die Verriegelungsbolzen (8, 9) in dem mittleren Dachteil (3) gehalten sind und der Verriegelungsbolzen (8) im vorderen Abschnitt und der Verriegelungsbolzen (9) im hinteren Abschnitt des mittleren Dachteiles (3) über eine gemeinsame Stelleinrichtung (12) betätigbar sind.

10. Fahrzeugverdeck nach einem der Ansprüche 1 bis 9,
**dadurch gekennzeichnet,**
**dass** das fahrzeugfeste Bauteil, an das das Dachteil (2) in Schließposition angrenzt, eine vordere A-Säule (24) des Fahrzeugs ist, in die ein Führungsrohr (23) integriert ist.

## Claims

1. Vehicle top which can be adjusted between a closed position and an open position, having at least one roof part (2, 3, 4) which forms a roof outer skin in the closed position and is connected to an adjacent roof part (2, 3, 4) or component (24) fixed on the vehicle via a locking bolt (8, 9, 22), it being possible for the locking bolt (8, 9, 22) to be adjusted between a locking position and a release position, **characterized in that** a guide tube (5, 6, 7, 23) is integrated in each case in the roof part (2, 3, 4) or in the adjacent component (24) fixed on the vehicle, **in that**, in the closed position of the vehicle top (1), the guide tubes (5, 6, 7, 23) are in alignment and have a common, continuous tube with a common tube axis, and **in that** the guide tubes (5, 6, 7, 23) are to be connected via the locking bolt (8, 9, 22) which is guided displaceably in the guide tubes (5, 6, 7, 23).

2. Vehicle top according to Claim 1, **characterized in that** the locking bolt (8, 9, 22) has a latching lug (18) which projects in the locking position into a corresponding recess (19) in one of the guide tubes (5, 6, 7, 23).

3. Vehicle top according to Claim 1 or 2, **characterized in that** an actuator (12) for actuating the locking bolt (8, 9,22) is provided.

4. Vehicle top according to one of Claims 1 to 3, **characterized in that** the locking bolt (8, 9, 22) can be actuated via the roof kinematics of the vehicle top (1).

5. Vehicle top according to one of Claims 1 to 4, **characterized in that** a respective locking bolt (8, 9) is provided on the left and right of a longitudinal centre axis in both side regions of the roof part (2, 3, 4).

6. Vehicle top according to one of Claims 1 to 5, **characterized in that** the vehicle top (1) is designed as a hard top and the roof parts (2, 3, 4) are of inherently rigid design.

7. Vehicle top according to one of Claims 1 to 6, **characterized in that** at least two roof parts (2, 3, 4) are provided, the said roof parts, in the closed position, being adjacent to each other situated one behind the other in the longitudinal direction of the vehicle and in which a respective guide tube (5, 6, 7) runs, and which are to be connected via a locking bolt (8, 9).

8. Vehicle top according to Claim 7, **characterized in that** a total of three roof parts (2, 3, 4) are provided, and the front roof part (2) and the rear roof part (4) are to be locked to the central roof part (3) via a respective locking bolt (8, 9).

9. Vehicle top according to Claim 8, **characterized in that** the locking bolts (8, 9) are held in the central roof part (3), and the locking bolt (8) in the front section and the locking bolt (9) in the rear section of the central roof part (3) can be actuated via a common actuating device (12).

10. Vehicle top according to one of Claims 1 to 9, **characterized in that** the component which is fixed on the vehicle and to which the roof part (2) is adjacent in the closed position is a front A-pillar (24) of the vehicle, in which a guide tube (23) is integrated.

## Revendications

1. Capote de véhicule pouvant être déplacée entre une position de fermeture et une position d'ouverture, comprenant au moins une partie de toit (2, 3, 4) qui forme une enveloppe de toit en position de fermeture et est reliée par le biais d'un verrou (8, 9, 22) à une partie de toit (2, 3, 4) ou un composant fixe au véhicule (24) adjacent, le verrou (8, 9, 22) étant déplaçable entre une position de verrouillage et une position de déverrouillage, **caractérisée en ce qu'**un tube conducteur (5, 6, 7, 23) est intégré à chaque fois dans la partie de toit (2, 3, 4) ou dans le composant fixe au véhicule (24) adjacent, **en ce qu'**en position de fermeture de la capote de véhicule (1), les tubes conducteurs (5, 6, 7, 23) sont en alignement et présentent un tube continu commun avec un axe de tube commun et **en ce que** les tubes conducteurs (5, 6, 7, 23) doivent être reliés par le biais du verrou (8, 9, 22) qui est guidé de manière coulissante dans les tubes conducteurs (5, 6, 7, 23).

2. Capote de véhicule selon la revendication 1,
**caractérisée en ce que** le verrou (8, 9, 22) présente un nez d'encliquetage (18) qui dépasse dans la position de verrouillage dans un évidement (19) correspondant dans un des tubes conducteurs (5, 6, 7, 23).

3. Capote de véhicule selon la revendication 1 ou 2,
**caractérisée en ce qu'**un actuateur (12) est prévu en vue de l'actionnement du verrou (8, 9, 22).

4. Capote de véhicule selon l'une quelconque des revendications 1 à 3, **caractérisée en ce que** le verrou (8, 9, 22) peut être actionné par le biais de la cinématique de toit de la capote de véhicule (1).

5. Capote de véhicule selon l'une quelconque des revendications 1 à 4, **caractérisée en ce qu'**un verrou (8, 9) est à chaque fois prévu dans les deux régions latérales de la partie de toit (2, 3, 4) à gauche et à droite d'un axe médian longitudinal.

6. Capote de véhicule selon l'une quelconque des revendications 1 à 5, **caractérisée en ce que** la capote de véhicule (1) est réalisée en tant que hard-top et les parties de toit (2, 3, 4) sont réalisées rigides en elles.

7. Capote de véhicule selon l'une quelconque des revendications 1 à 6, **caractérisée en ce qu'**au moins deux partis de toit (2, 3, 4) sont prévues, lesquelles sont adjacentes les unes aux autres couchées les unes derrière les autres en position de fermeture dans la direction longitudinale du véhicule et dans lesquelles un tube conducteur (5, 6, 7) s'étend à chaque fois et lesquelles doivent être reliées par le biais d'un verrou (8, 9).

8. Capote de véhicule selon la revendication 7,
**caractérisée en ce qu'**au total trois parties de toit (2, 3, 4) sont prévues et la partie de toit avant (2) et la partie de toit arrière (4) doivent être verrouillées avec la partie de toit centrale (3) par le biais d'un verrou (8, 9) à chaque fois.

9. Capote de véhicule selon la revendication 8,
**caractérisée en ce que** les verrous (8, 9) sont maintenus dans la partie de toit centrale (3) et le verrou (8) est actionnable dans la portion avant et le verrou (9) est actionnable dans la portion arrière de la partie de toit centrale (3) par le biais d'un dispositif de réglage commun (12).

10. Capote de véhicule selon l'une quelconque des revendications 1 à 9, **caractérisée en ce que** le composant fixe au véhicule auquel la partie de toit (2) est adjacente en position de fermeture est une colonne A avant (24) du véhicule dans laquelle un tube conducteur (23) est intégré.
